# EUROPÄISCHE PATENTANMELDUNG

(11) **EP 0 941 832 A1**
(43) Veröffentlichungstag der Anmeldung: **15.09.1999**
(21) Anmeldenummer: 99102839.0
(22) Anmeldetag: 01.03.1999
(51) Int. Cl.: B30B 1/26, F16C 3/28

(54) **Exzenterpresse mit variabler Stösselbewegung**

(30) Priorität: 11.03.1998 DE 19810406
(71) Anmelder: Schuler Pressen GmbH & Co. KG, 73033 Göppingen (DE)
(72) Erfinder: Wegener, Konrad, Dr.-Ing., 73033 Göppingen (DE)

(57) **Zusammenfassung**

Ein Stößelantrieb (1) zum Antreiben eines Stößels einer Exzenterpresse ist als Exzenterantrieb ausgebildet, dem eine weitere Exzentereinrichtung (9) nachgeordnet ist. Der Stößelantrieb (1) weist eine Exzenterwelle (2) mit einem Exzenter (3) auf, auf dem bspw. eine Exzenterbüchse (9) sitzt. Die Exzenterbüchse (9) lagert das Pleuel (12). Die Exzenterbüchse (9) ist von einem Servoantrieb (14) angetrieben, der im Gegensatz zu dem Antrieb der Exzenterwelle (2) mit geringen Trägheitsmomenten belastet ist und gezielt und schnell verzögert und beschleunigt werden kann. Auf diese Weise können von der Sinusschwingung deutlich abweichende Stößelkurven erzeugt werden.

## Beschreibung

Die Erfindung betrifft eine Exzenterpresse, bei der der Weg-Zeit-Verlauf für den Stößel einstellbar ist.

Bei vielen Anwendungen wird gewünscht, den Bewegungsverlauf eines Pressenstößels einstellen oder gezielt beeinflussen zu können. Dies kann bspw. bei Ziehpressen der Fall sein, bei denen gegen Ende des Abwärtshubs des Stößels ein längerer Wegabschnitt mit konstanter geringer Geschwindigkeit gewünscht wird. Die genaue Länge und Lage dieses Wegabschnitts hängt von den Anforderungen des zu bearbeitenden Werkstücks ab. Beispielsweise können beim Feinschneiden extrem langsame Schnittgeschwindigkeiten erforderlich sein, wobei der Stößel ansonsten jedoch zügig zu bewegen ist. Bei Kaltmassivumformungen sind häufig lange Druckberührzeiten gewünscht; beim Warmmassivumformen sind dagegen häufig kurze Druckberührzeiten gefordert. Zur Optimierung der Zeitaufteilung eines Arbeitsvorgangs kann es schließlich erforderlich werden, den Stößel für den Werkstücktransport relativ lange in der oberen Totpunktlage sehen zu lassen, in der Nähe des unteren Totpunkts langsam zu bewegen, um lange Umformzeiten zu erhalten, und Vor- und Rücklauf zügig auszuführen.

Außerdem Kann es erforderlich werden, den Stößelhub einzustellen. Dies kann wiederum bei Ziehpressen der Fall sein, wenn bspw. von einem Werkstück, das weniger tief zu ziehen ist, auf ein anderes Werkstück umzustellen ist, das tiefer zu ziehen ist. Unterschiedliche Werkzeuge können unterschiedliche Führungslängen aufweisen, an die der Pressenhub anzupassen ist. Außerdem kann es erforderlich werden, die Hublage zu verstellen.

Aus der DE-OS 2305638 ist ein Kurbelgetriebe mit einstellbarem Hub bekannt. Das Kurbelgetriebe weist eine Kurbel mit einem an einer drehbaren gelagerten Welle exzentrisch gehaltenen Kurbelzapfen auf, auf dem eine Büchse angeordnet ist. Diese ist exzentrisch ausgebildet, d.h. ihre Bohrung ist gegen die Mittelachse des Außenmantels versetzt. Die Büchse ist durch eine mit einer Innenverzahnung versehene Kupplungsmuffe an dem Kurbelzapfen gesichert und in Kuppelstellung somit gegen diesen unverdrehbar. Auf der Büchse sitzt ein Pleuel, das bei Drehung der Kurbel eine Kurbelbewegung ausführt.

Die Kupplungsmuffe kuppelt die Büchse lösbar mit dem Kurbelzapfen. Zur Einstellung der Relativ-Drehposition der Muffe in Bezug auf den Kurbelzapfen ist ein Stellantrieb vorgesehen, der bei stillstehender Kurbel mit der Büchse in Eingriff zu bringen ist. Die Kupplungsmuffe wird dabei gelöst, so dass die Büchse gezielt gegen den Kurbelzapfen verdreht werden kann. Damit kann der Hub des Stößels eingestellt werden. Jedoch führt der Stößel in allen Einstellpositionen der Büchse eine annähernd sinusförmige Hubbewegung aus. Die Kurvenbewegung seiner Hin- und Herbewegung ist nicht einstellbar.

Aus der DE-PS 409075 ist eine Exzenterpresse mit einem Stößel bekannt, in dem ein Hydraulikzylinder untergebracht ist. Dieser steht mit einem ggfs. druckbeaufschlagbaren Ausgleichsvolumen in Verbindung, wodurch die von dem Hydraulikzylinder übertragbare Maximalkraft einstellbar ist. Damit kann eine Bewegungskurve eines von dem Stößel bzw. seinem Hydraulikzylinder getragenen Werkzeugs erreicht werden, die von der Sinusform abweicht. Allerdings ist eine gezielte Einstellung eines gewünschten Kurvenverlaufs zumindest schwierig und erfordert leistungsfähige hydraulische Mittel.

Aus der EP 0561604 B1 ist eine Exzenterpresse bekannt, bei der die Winkelgeschwindigkeit des Exzenters modulierbar ist. Dazu weist der Antrieb des Exzenters an wenigstens einer Stelle ein Planetengetriebe auf, mit dem einer von einem Hauptantrieb herrührenden Drehbewegung eine weitere Drehbewegung überlagert werden kann. Bspw. ist der Hauptantrieb an das Sonnenrad angeschlossen, während der Exzenter von dem Planetenträger her angetrieben ist und das Hohlrad mit einem Hilfsantrieb verbunden ist.

Mit dieser Anordnung kann eine vom Sinusverlauf abweichende Stößelbewegung erzielt werden. Allerdings muss von dem Hilfsantrieb dazu der gesamte Exzenter beschleunigt oder verzögert werden, was infolge der zu überwindenden Trägheit bzw. des Massenträgheitsmoments einen kräftigen Antrieb verlangt und dennoch die zu erzielenden Abweichungen des Kurvenverlaufs von der Sinusform einschränkt. Außerdem ist es nicht möglich, auf diese Weise den Stößelhub zu beeinflussen.

Davon ausgehend ist es Aufgabe der Erfindung, eine Exzenterpresse mit einstellbarem Weg-Zeit-Verlauf der Stößelbewegung zu schaffen, die wenigstens einen der obengenannten Nachteile überwindet.

Diese Aufgabe wird von einer Exzenterpresse mit den Merkmalen des Patentanspruchs 1 gelöst.

Erfindungsgemäß ist der Exzenter einer Exzenterpresse mit einer weiteren Exzentereinrichtung versehen, die mit einem Servoantrieb in Verbindung steht. An der Exzentereinrichtung ist das Pleuel der Exzenterpresse schwenkbar gelagert. Die Exzentereinrichtung ist dabei so ausgebildet, dass die Schwenkachse des Pleuels gegen die Mittel- oder Symmetrieachse des Exzenters versetzt ist. Durch den Servoantrieb wird die Exzentereinrichtung bei Betrieb der Presse gezielt gedreht oder auch lediglich verschwenkt, oder im Bedarfsfall so geführt, dass sie sich obwohl der Exzenter umläuft gerade nicht dreht und auch nicht schwenkt. Die Servoeinrichtung gestattet es, die Dreh- oder Schwenkbewegung der Exzentereinrichtung unabhängig von der gleichmäßigen Drehung der Exzenterwelle festzulegen, so dass innerhalb vorgegebener Grenzen praktisch beliebige Bewegungskurven für den Pressenstößel erreicht werden können. Durch eine Drehung der zusätzlichen Exzentereinrichtung wird sowohl der am Pleuel wirksame Umlaufradius als auch auch der am Pleuel wirksame Exzenterwinkel beeinflusst. Dabei kann nicht nur die Kurvenform, sondern auch die Hubweite und die Stößellagegezielt verändert werden. Bei Hubweiteneinstellung rotiert die Exzentereinrichtung nach der Einstellung exzenterwellenfest. Dies kann auch mittels einer Verbindungseinrichtung erreicht werden, die zwischen der Exzenterwelle und der Exzenterbüchse wirkt. Bei Einstellung der Stößellage ist die Exzenterbüchse nach erfolgter Einstellung pleuelfest. Dazu kann eine Verbindungseinrichtung vorgesehen werden, die zwischen dem Pleuel und der Exzenterbüchse wirkt.

Die Erzeugung von unterschiedlichen Bewegungskurven gelingt, ohne die Exzenterwelle oder deren Antrieb beschleunigen oder verzögern zu müssen. Nur die auf dem Exzenter sitzende Exzenterbüchse muß beschleunigt und verzögert werden. Der Servoantrieb beeinflusst sowohl den Weg-Zeit-Verlauf der Bewegung des Stößels als auch den Zusammenhang zwischen dem Winkel der Exzenterwelle und dem Stößelweg (Weg-Winkel-Verlauf).

Damit wird es möglich, mit technisch verfügbaren Servoantrieben und ggfs. Untersetzungsgetrieben relativ stark von der Sinusform abweichende Schwingungsformen (Hubkurven) des Stößels zu erreichen. Solche Kurven können durch Beeinflussung des Hauptantriebs wegen der hier vorhandenen Schwungmassen nicht erreicht werden. Bei der erfindungsgemäßen Exzenterpresse kann der Hauptantrieb mit einem großen Schwungrad zum Ausgleich von Belastungsschwankungen ausgestattet werden, wobei sich der zu beschleunigende und zu verzögernde Teil der von dem Antriebsmotor bis zu dem Stößel gehenden Kraftübertragungskette auf den Abschnitt beschränkt, der auf den Exzenter folgt. Die von dem Servoantrieb zu überwindenden Trägheiten sind dadurch relativ gering gehalten.

Die von dem Exzenter getragene, von dem Servoantrieb separat angetriebene Exzentereinrichtung kann prinzipiell auf unterschiedliche Weisen ausgebildet werden. Bspw. ist es möglich, eine Exzenterbüchse vorzusehen, die auf dem Exzenter sitzt und an ihrer Außenseite das Pleuel trägt. Die Exzenterbüchse bewirkt einen Versatz der Schwenkachse des Pleuels gegen die Mitte des Exzenters. Eine Verdrehung der Exzenterbüchse ändert die Position des Pleuels in Bezug auf den Exzenter, so dass durch eine gezielte Bewegung der Exzenterbüchse während der Arbeit der Exzenterpresse eine Beeinflussung der Stößelbewegung herbeigeführt werden kann.

Die Exzentereinrichtung kann, bspw. wenn ein relati großer Versatz der Schwenkachse des Pleuels gegen die Exzentermitte gewünscht ist, bedarfsweise auch anderweitig, bspw. als hebelartiges Zwischenglied ausgebildet sein, das mit einem Ende an dem Exzenter und mit seinem anderen Ende an dem Pleuel gelagert ist. Dieses Zwischenglied ist dann mit dem Servoantrieb verbunden, der im bspw. gezielt eine Schwenkbewegung erteilt.

Die Servoeinrichtung wird vorzugsweise durch ein oder mehrere elektrische oder hydraulische Servomotoren gebildet. Diese sind vorzugsweise Drehantriebe. Bspw. ist es möglich, den Servomotor oder die Servomotoren gestellfest anzuordnen. Die von dem Servomotor erzeugte Drehbewegung wird durch ein geeignetes Getriebemittel auf die Exzentereinrichtung übertragen. Dies ist bspw. über eine Schmidt-Kupplung oder über einen Zahnradtrieb möglich. Mit beiden Getriebemitteln kann die Bewegung des Servomotors winkeltreu auf die Exzentereinrichtung übertragen werden. Bedarfsweise können auch Hebelverbindungen eingesetzt werden. Dies gilt insbesondere, wenn die Exzentereinrichtung lediglich eine hin- und hergehende Schwenkbewegung ausführen, nicht aber rotieren soll.

Die Servoeinrichtung kann bedarfsweise auch auf bewegten Teilen angeordnet werden. Bspw. kann sie von der Exzenterwelle, dem Exzenter oder dem Pleuel getragen werben. In den beiden erstgenannten Fällen erfolgt eine Energieübertragung auf die Servoeinrichtung über entsprechende Drehkupplungen. Wird die Servoeinrichtungen durch ein oder mehrere Elektromotoren gebildet, kann die Übertragung bspw. über Schleifringe, transformatorisch oder induktiv erfolgen. Wird die Servoeinrichtung an dem Pleuel angeordnet, kann die Energieübertragung über flexible Kabel vorgenommen werden. Die Anordnung der Servomotoren an dem Pleuel kann sowohl zum Schwenken der Exzentereinrichtung in Bezug auf das Pleuel als auch dazu genutzt werden, die Exzentereinrichtung (-büchse) rotieren zu lassen. Im ersten Fall genügt eine auf Zug und Druck arbeitende Antriebsverbindung, wie bspw. eine Kugelumlaufspindel, deren Mutter mit der Exzentereinrichtung verbunden und deren an dem Pleuel axial unverschiebbar jedoch drehbar gelagerte Gewindespindel mit dem Servomotor verbunden ist. Soll der Exzentereinrichtung eine Rotationsbewegung erteilt werden, ist zwischen dem Servomotor und der Exzentereinrichtung ein Zahnrad- oder Schneckentrieb angeordnet.

Die Servoeinrichtung kann durch eine Bremse unterstützt werden, die mit der die Bewegung der Servoeinrichtung in ausgewählten Kurbelwinkelabschnitten energiefrei blockiert werden kann.

Das Konzept mit der zwischen dem Exzenter und dem Pleuel angeordneten zusätzlichen Exzentereinrichtung gestattet außerdem einen Direktantrieb der Exzentereinrichtung entweder von dem Exzenter oder von dem Pleuel her. Wird bspw. eine Exzenterbüchse als Rotor ausgebildet, kann der zugehörige Stator in oder an dem Pleuel und/oder in oder an dem Exzenter ausgebildet werden. Hier kann sowohl ein elektrischer als auch ein hydraulischer Direktantrieb Anwendung finden.

Einzelheiten vorteilhafter Ausführungformen der Erfindung ergeben sich aus Unteransprüchen, der Zeichnung und der dazugehörigen Beschreibung. Es zeigen:
Fig. 1 den Antrieb einer Exzenterpresse mit Zusatzexzenter in schematisierter Prinzipdarstellung,
Fig. 2 eine Schmidt-Kupplung zur Übertragung einer Drehbewegung von einem auf der Exzenterwelle des Antriebs der Exzenterpresse nach Figur 1 gelagerten Zahnrad auf ein auf dem Exzenter gelagertes Rad, in Prinzipdarstellung,
Fig. 3 ein Weg-Zeit-Diagramm für den Weg des Stößels der Exzenterpresse sowie für Bewegungskomponenten durch Drehung des Zusatzexzenters und durch Drehung des Exzenters.
Fig. 4 eine Exzenterwelle mit auf dem Exzenter gelagerter zusätzlicher Exzentereinrichtung und einer von der Exzenterwelle getragenen Servoantriebseinrichtung in längsgeschnittener Darstellung.
Fig. 5 die Antriebseinrichtung nach Figur 4, in schematisierter Darstellung,
Fig. 6 eine Antriebseinrichtung mit einer auf einem Exzenter gelagerten Exzentereinrichtung, die von einer gestellfest gelagerten Servoeinrichtung her angetrieben ist, in schematisierter Darstellung.
Fig. 7 einen Exzenterantrieb mit einer zwischen Pleuel und Exzenter angeordneten zusätzlichen Exzentereinrichtung, die von einem von dem Pleuel getragenen Servomotor angetrieben ist, in einem schematisierten axialen Schnitt,
Fig. 8 eine abgewandelte Ausführungsform eines Exzenterantriebs mit vom Pleuel getragenen Servomotor, in einer schematisierten Vorderansicht,
Fig. 9 einen Exzenterantrieb mit einer zwischen Pleuel und Exzenter angeordneten Exzentereinrichtung, die mittels eines Servo-Linearantriebs verstellbar ist, der sich an der Exzenterwelle abstützt,
Fig. 10 einen Exzenterantrieb mit einer gestellfest gelagerten Linear-Servoantriebseinrichtung, in einer schematisierten Vorderansicht,
Fig. 11 einen Exzenterantrieb mit zusätzlicher Exzentereinrichtung, die als Hebelverbindung zwischen dem Exzenter und dem Pleuel ausgebildet ist,
Fig. 12 einen Exzenterantreib mit zusätzlicher Exzentereinrichtung und mit einem verstellbaren Massenausgleichsexzenter, in schematisierter Darstellung, und
Fig. 13 den Exzenterantrieb nach Fig. 12 in einer schematisierten Schnittdarstellung.

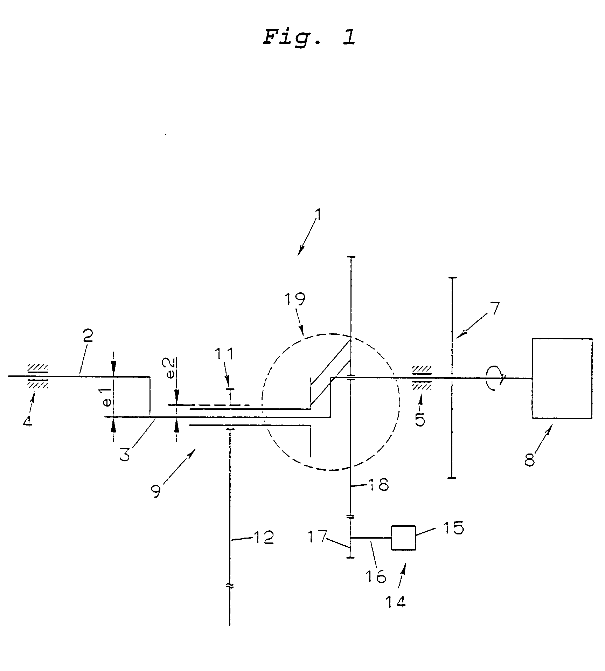

In Figur 1 ist eine Exzenterpresse anhand ihres Stößelantriebs 1 veranschaulicht. Zu diesem gehören eine Exzenterwelle 2 mit einem Exzenter 3. Die Exzenterwelle 2 ist mit-Lagern 4, 5 gestellfest drehbar gelagert. Ein drehfest mit der Exzenterwelle 2 verbundenes Schwungrad 7 dient dem Ausgleich von Belastungsspitzen und der Vergleichmäßigung der Drehbewegung die die Exzenterwelle 2 von einem Hauptantrieb 8 erhält. Dieser treibt die Exzenterwelle 2 mit einer festen Drehzahl an. Der Hauptantrieb 8 kann dabei bedarfsweise so ausgebildet sein, dass die feste Drehzahl in Grenzen wählbar vorgebbar ist. Für ein oder mehrere Umdrehungen der Exzenterwelle 2 ist die Drehzahl des Hauptantriebs 8 jedoch konstant.

Der Exzenter 3 ist mit einer Exzentrizität e1 zu der Drehachse der Exzenterwelle 2 angeordnet. Auf dem Exzenter 3 ist eine Exzentereinrichtung 9 angeordnet, die in dem in Figur 1 veranschaulichten Ausführungsbeispiel als Exzenterbüchse ausgebildet ist. Die Exzenterbüchse 9 ist drehbar auf dem Exzenter 3 gelagert und definiert eine Exzentrizität e2 durch einen entsprechenden Achsversatz zwischen ihrer Öffnung, mit der sie auf dem Exzenter 3 sitzt, und ihrer äußeren Lagerfläche 11, die von einer entsprechenden Öffnung eines Pleuels 12 umgriffen ist. Das Pleuel 12 dient dem Antrieb eines Stößels, wobei die Bewegungskurve des Stößels einstellbar ist.

Dazu ist die Exzenterbüchse 9 mit einem Servoantrieb 14 verbunden, der gestellfest gelagert ist. Der Servoantrieb 14 wird bspw. durch einen Elektromotor 15 gebildet, dessen Drehzahl und Drehposition von einer entsprechenden, bspw. computergesteuerten, nicht veranschaulichten Steuereinrichtung definiert vorgebbar und einstellbar ist. Seine Abtriebswelle 16 trägt ein Zahnrad 17, das mit einem auf der Exzenterwelle 2 sitzenden und drehbar auf dieser gelagerten Zahnrad 18 kämmt. Das Zahnrad 18 ist über eine Parallelogrammkupplung (Schmidt-Kupplung) 19 mit der Exzenterbüchse 9 gekuppelt. Die Schmidt-Kupplung 19 überträgt eine Drehbewegung des Zahnrads 18 winkeltreu auf die Exzenterbüchse 9.

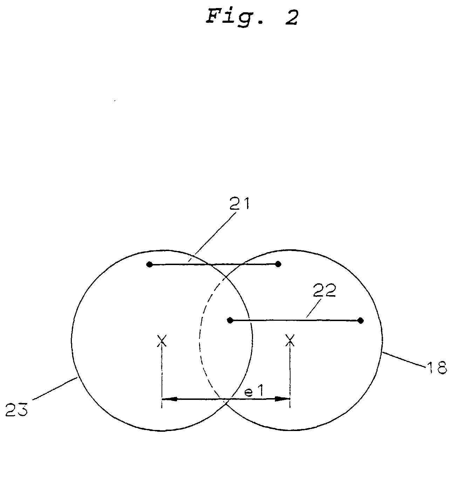

Zur Veranschaulichung ist die Schmidt-Kupplung 19 in Figur 2 gesondert veranschaulicht. Das Zahnrad 18 ist über wenigstens zwei Lenker 21 22 mit einem weiteren Rad 23 verbunden, das drehfest mit der Exzenterbüchse 9 verbunden ist. Die Lenker 21, 22 sind dabei gleich lang. Ihre Länge entspricht der Exzentrizität e1. Die Anlenkpunkte der Lenker 21, 22 sind sowohl an dem Zahnrad 18 als auch an dem Rad 23 jeweils um 90° gegeneinander versetzt.

Die insoweit anhand ihres Stößelantriebs 1 beschriebene Exzenterpresse arbeitet wie folgt:

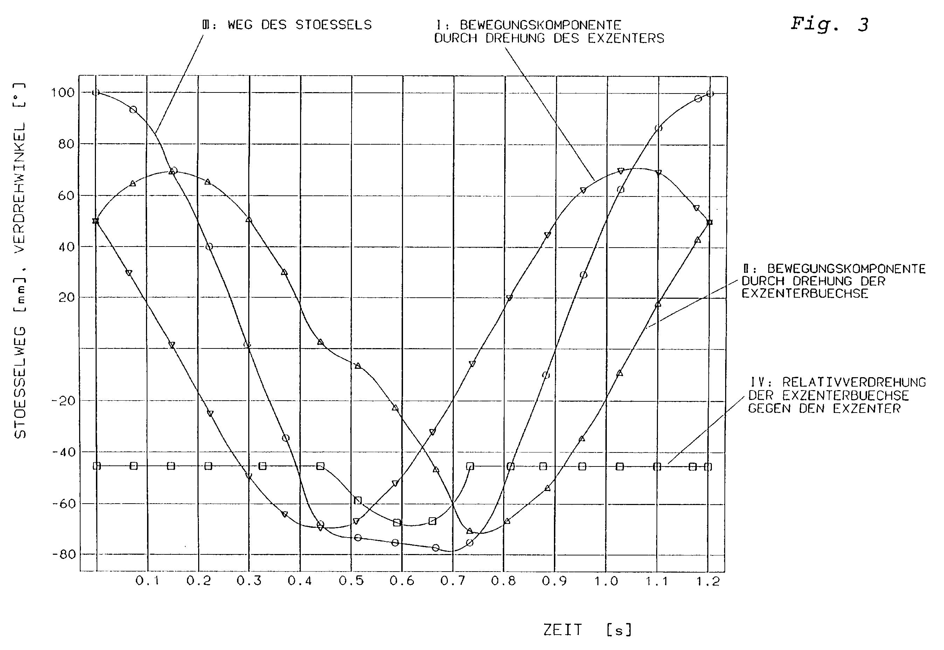

In Figur 3 sind Bewegungsabläufe einzelner Teile des Exzenterantriebs 1 veranschaulicht. Die mit I bezeichnete Kurve veranschaulicht die Bewegungskomponente, die durch gleichförmige Drehung des Exzenters 3 verursacht wird. Aufgetragen ist die Höhe eines gedachten, an den Exzenter 3 angeschlossenen Stößels in Abhängigkeit von der Zeit T. Wegen der gleichförmigen Drehung der Exzenterwelle 2 entsteht eine Kurve, die bei langen Pleueln oder unter Vernachlässigung der durch das Schwenken des Pleuels 12 erhaltenen Pleuelverkürzung einer Sinuskurve entspricht.

Der durch die Kurve I veranschaulichten Bewegung des Exzenters 3 ist eine weitere Bewegungskomponente überlagert, die durch die Drehung der Exzenterbüchse 9 erhalten wird. Diese Kurve ist in Figur 3 mit II bezeichnet. Diese von der Sinusform abweichende Bewegung wird durch winkelabhängiges beschleunigtes und verzögertes Drehen der Exzenterbüchse 9 erhalten. Dazu dient der Servoantrieb 14, der die Exzenterbüchse 9 während eines Pressenumlaufs bedarfsweise auch mehrmals beschleunigen und verzögern kann. Die den Servoantrieb 14 belastenden Trägheiten sind relativ gering, so dass hier schnelle Beschleunigungs- und Bremsvorgänge durchgeführt werden können, während der Hauptantrieb 8 mit konstanter Drehzahl läuft. Durch die Überlagerung der Umlaufbewegung des Exzenters 3 mit der Exzentrizität e1 und die bedarfsweise beschleunigte und verzögerte Drehung der Exzenterbüchse 9 mit der Exzentrizität e2 entsteht die in Figur 3 veranschaulichte Kurve 3. Im vorliegenden Beispiel ist die Bewegungskomponente, die durch die Drehung der Exzenterbüchse 9 verursacht wird, so ausgelegt, dass die über-lagerte, durch die Kurve 3 veranschaulichte Bewegung den typischen Verlauf einer Ziehkurve erhält, wie sie bei Ziehpressen gefordert wird. Jedoch können bedarfsweise auch andere Bewegungsverläufe eingestellt werden. Außerdem können die genauen Parameter der Ziehkurve, wie Hubhöhe und Größe und Position einzelner Kurvenabschnitte beeinflußt werden.

Schliesslich ist mit einer Kurve IV noch die Relativdrehung der Exzenterbüchse gegen den Exzenter aufgetragen. Hier ist ersichtlich, dass die Relativdrehung in dem abgeflachten Ziehbereich Z der Ziehkurve Veränderungen unterliegt, d.h. der Servoantrieb 14 beschleunigt und verzögert.

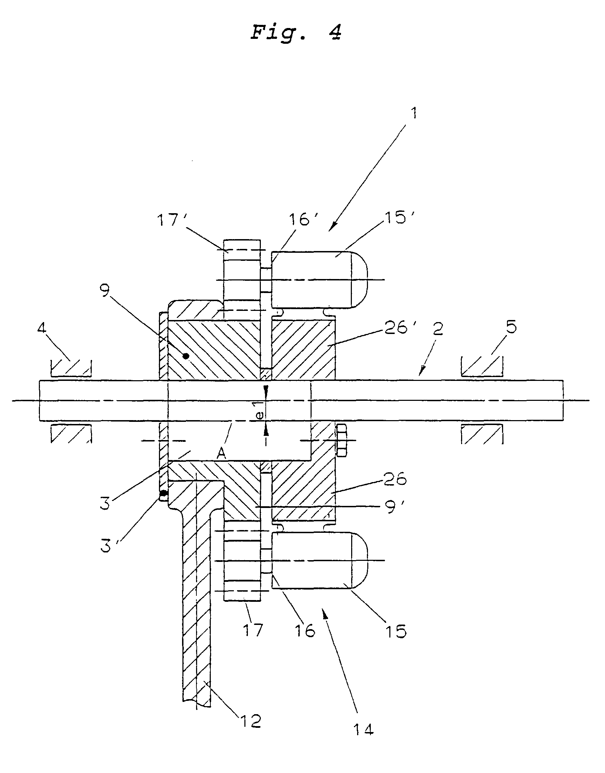

In Figur 4 ist eine abgewandelte Ausführungsform des Stößelantriebs 1 veranschaulicht. Abweichend von dem Stößelantrieb 1 nach Figur 1, ist der Servoantrieb 14 nicht gestellfest angeordnet, sondern von der Exzenterwelle 2 getragen. Der Exzenter 3 trägt durch eine Anlaufscheibe 3' gesichert eine Exzenterbüchse 9, die an einer Seite fest mit einem Zahnrad 9' verbunden ist. Die Exzenterbüchse 9 und das Zahnrad 9' sind dabei koaxial zu einer Achse A des Exzenters 3 angeordnet dessen Exzentrizität e1 beträgt. Auf der Exzenterwelle 2 sitzen außerdem ein oder mehrere Motorträger 26, 26', die den Servoantrieb tragen. Dieser wird durch ein oder mehrere Elektromotoren 15, 15' gebildet, die in jeweils gleichem Abstand zu der Achse A des Exzenters 3 angeordnet sind. An ihren Abtriebswellen 16, 16' sind als Ritzel ausgebildete Zahnräder 17, 17' gehalten, die mit dem Zahnrad 9' kämmen.

Die Leistungsversorgung der Elektromotoren 15, 15' sowie ggfs. weiterer Servomotoren erfolgt bspw. über Schleifringe. Außerdem ist es möglich, die geforderte Leistung über induktive, transformatorische Kupplungseinrichtungen von einem gestellfesten Abschnitt auf einen mit der Exzenterwelle 2 verbundenen Abschnitt zu kuppeln.

Sowohl bei den Ausführungsbeispielen nach Figur 1 als auch bei dem Ausführungsbeispiel nach Figur 4, als auch bei den nachfolgen beschriebenen Ausführungsformen ist die Exzentrizität e2 vorzugsweise kleiner als die Exzentrizität e1. Dadurch wird erreicht, dass der durch das Schwungrad 7 gepufferte Hauptantrieb 8 die Hauptantriebsleistung aufbringt. Bedarfsweise können die Exzentrizitäten jedoch auch abweichend festgelegt werden, bspw. wenn die gewünschten Abweichungen der Stößelbewegungen von der Sinusform besonders gravierend sind, d.h. wenn die Oberwellenanteile der Stößelbewegung größer sind als deren Grundwelle. Wenn die Bewegung der Exzentereinrichtung 9 in einem solchen Fall auf Schwenkbewegungen möglichst mit nicht zu großer Amplitude beschränkt werden, bleibt auch hier die Hauptantriebsleistung von dem Hauptantrieb 8 aufzubringen.

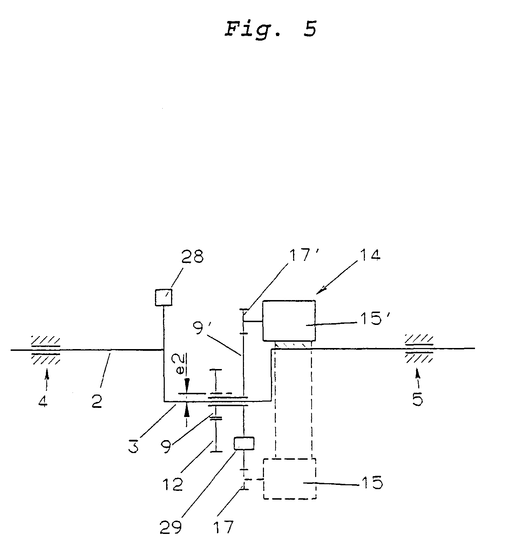

In Figur 5 ist das Ausführungsbeispiel des Stößelantriebs 1 nach Figur 4 schematisch veranschaulicht, wobei zusätzlich Massenausgleichsgewichte 28, 29 vorgesehen sind. Das Massenausgleichsgewicht 28 dient zum Ausgleich der von dem Exzenter 3 hervorgerufenen Unwucht. Es ist an einer dem Exzenter 3 bezüglich der Exzenterwelle 2 diametral gegenüberliegenden Seite der Exzenterwelle 2 angeordnet. Seine Masse entspricht etwa der Masse des Exzenters 3 und der mit diesem exzentrisch umlaufenden Teile. Die zusätzlich Exzentereinrichtung 9 verursacht durch ihre Bewegung ebenfalls Unwuchten, die durch das Massenausgleichsgewicht 29 ausgeglichen werden. Dazu ist das Massenausgleichsgewicht 29 an einer Exzentrizität e2 des Exzenters 9 gegenüberliegenden Seite angeordnet. Bspw. kann es an oder in dem Zahnrad 9' untergebracht werden. Damit ist sowohl der Exzenter 3 als auch die Exzentereinrichtung 9 ausgewuchtet.

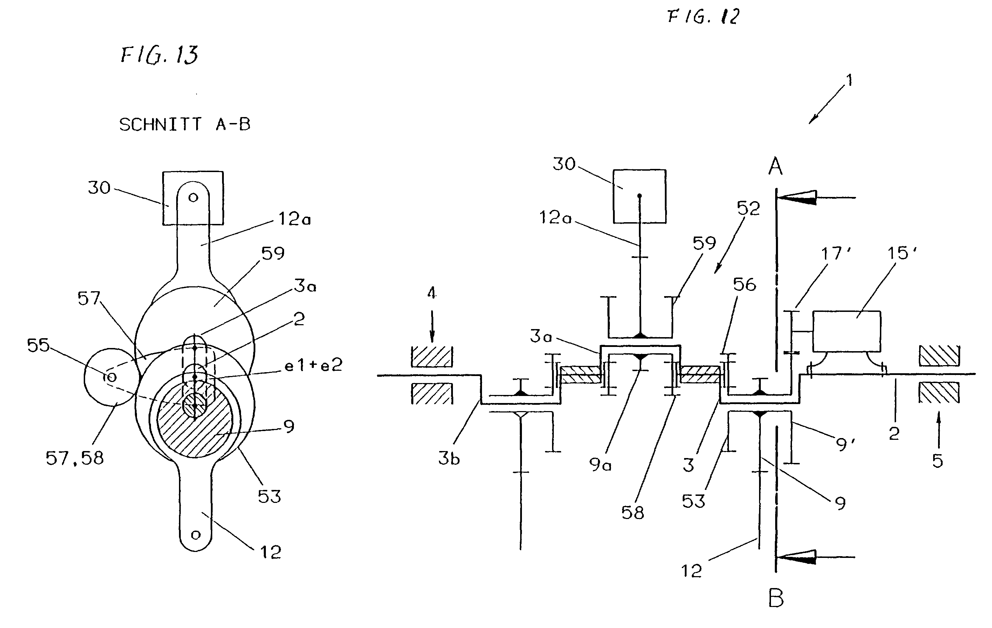

Ein auf der Ausführungsform nach Fig. 5 aufbauender Stößelantrieb 1 mit translatorischem und rotatorischem Massenausgleich ist aus Fig. 12 und 13 ersichtlich. Soweit zwischen den Stößelantrieben 1 nach Fig. 5 und 12 bzw. 13 strukturelle und funktionelle Übereinstimmung oder Analogie besteht, sind in Fig. 12 ohne erneute Beschreibung gleiche Bezugszeichen verwendet. Die Exzenterwelle 2 weist axial von dem Exzenter 3 beabstandet einen weiteren Exzenter 3a auf, der gegen den Exzenter 3 um 180° versetzt angeordnet ist und der dem Antrieb eines zu dem Stößel gegenläufig translatorisch bewegten Massenausgleichsgewichts 30 dient. Eine auf dem Exzenter 3a angeordnete Exzenterbüchse 9a dient dem Antrieb eines Pleuels 12a, das seinerseits das Masssenausgleichsgewicht 30 antreibt. Prinzipiell kann die Exzenterbüchse 9a mit einem eingenen Servoantrieb versehen sein. Vorzugsweise ist jedoch zwischen den Exzenterbüchsen 9 und 9a ein Getriebe 52 angeordnet, das die Exzenterbüchsen 9 und 9a 1:1 dreht. Dazu ist die Exzenterbüchse 9 an ihrer dem Exzenter 3a zugewandten Seite mit einem Zahnrad 53 drehfest verbunden. Dieses kämmt mit einem an einem Ende einer Vorgelegewelle 55 drehbar gelagerten Zahnrad 56. Die Vorgelegewelle 55 ist mittels eines Lagerbocks oder Trägers 56 von der Hauptwelle 2 getragen. Das andere Ende der Vorgelegewelle 55 ist mit einem Zahnrad 58 versehen, das mit einer an der Exzenterbüchse 9a vorgesehenen Zahnrad 59 kämmt. Ein weiterer Exzenter 3b kann wiederum zum Antreiben des Stößels dienen. Eine von dem Exzenter 3b getragene Exzentereinrichtung kann mit der Exzentereinrichtung 9 über Getriebemittel gekoppelt und/oder mittels Servoantrieb gesondert angetrieben sein. Soll zwischen den Exzentern 3, 3a ein Lagerschild angeordnet werden, ist die Hauptwelle 2 wenigstens zwischen den Exzentern als Hohlwelle ausgeführt. Die Vorgelegewelle ist dann koaxial (zentral) in der Hauptwelle angeordnet.

Durch die winkelgerechte Kopplung zwischen den beiden Exzenterbüchsen 9, 9a wird neben dem rotatorischen Massenausgleich selbst bei komplizierten Bewegungskurven auch ein translatorischer Massenausgleich erhalten.

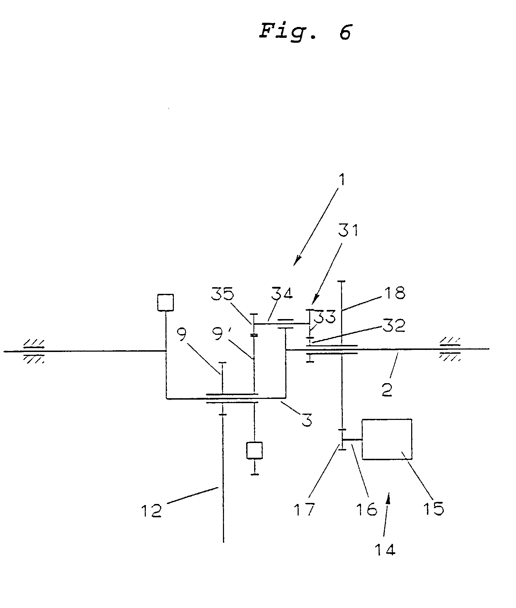

In Figur 6 ist eine abgewandelt Ausführungsform eines Stößelantriebs 1 mit gestellfestem Servoantrieb 14 veranschaulicht. Bei weitgehender struktureller Übereinstimmung mit dem Stößelantrieb 1 nach Figur 1, ist die dort verwendete Schmidt-Kupplung durch einen Zahnradtrieb 31 ersetzt. Der Motor 15 des Servoantriebs 14 trägt an seiner Abtriebswelle 16 ein Zahnrad 17, das mit dem Zahnrad 18 kämmt, das drehbar auf der Exzenterwelle 2 sitzt. Das Zahnrad 18 ist drehfest mit einem weiteren Zahnrad 32 verbunden, das ein Zahnrad 33 einer Vorgelegewelle 34 antreibt. Diese ist dem Exzenter 3 gegenüberliegend drehbar gelagert und treibt über ein Zahnrad 35 das Zahnrad 9' der Exzenterbüchse 9.

Anstelle der Vorgelegewelle 34 kann auch eine direkte Zahnverbindung zwischen dem Zahnrad 9' und dem Zahnrad 32 geschaffen werden wenn diese entsprechend angeordnet sind. Beispielsweise kann das Zahnad 9' als Hohlrad ausgebildet sein.

Weitere Abwandlungen der in den Figuren 1, 2, 4 bis 6 veranschaulichten Grundanordnung sind möglich. Bspw. kann abweichend von der in Figur 4 veranschaulichten Anordnung ein Servoantrieb 14 mit lediglich einem Elektromotor von der Exzenterwelle 2 getragen werden.

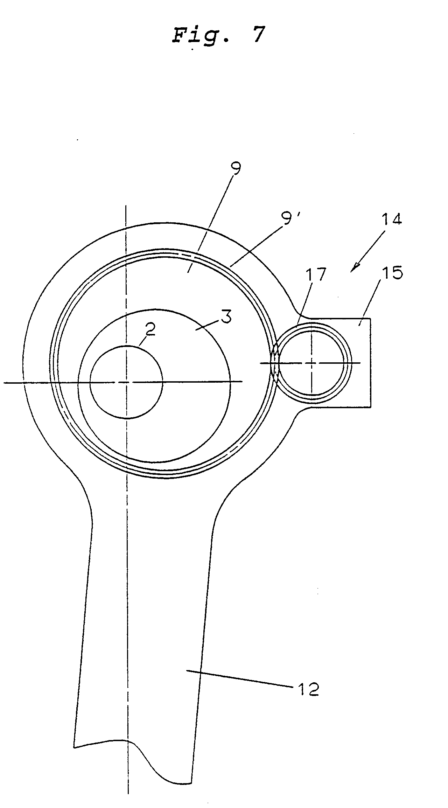

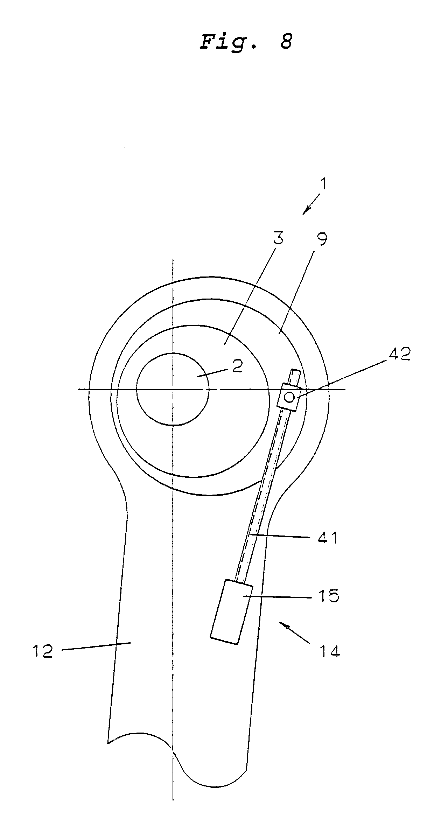

Wie in den Figuren 7 und 8 veranschaulicht, kann der Servoantrieb 14 auch von dem Pleuel 12 getragen sein. Bei der Ausführungsform nach Figur 7 sitzt der Motor 15 auf dem Pleuelfuss und treibt mit seinem Zahnrad 17 das Zahnrad 9' an, das in der veranschaulichten Ausführungsform den gleichen Außendurchmesser aufweist wie die Exzenterbüchse 9. Bedarfswesie kann der Durchmesser auch anderweitig festgelegt sein, so dass der Zahnkranz bspw. die axiale Fixierung des Pleuels bewirkt. Die Stromversorgung des Motors 15 kann über eine Kabelschlaufe erfolgen. Schleifringe oder andere Leistungsübertragungseinrichtungen, die eine Rotation ihrer Kupplungshälften zulassen, sind nicht erforderlich.

Kann auf eine vollständige Drehbewegung der Exzenterbüchse 9 verzichtet werden und ist zum Beeinflussen der Stößelkurve lediglich ein pendelndes Hin- und Herbewegen der Exzenterbüchse erforderlich, kann die Anordnung nach Figur 8 gettroffen werden. Hier ist der Servoantrieb 14 als Linearantrieb ausgebildet. Bspw. treibt der Motor 15 eine Gewindespindel 41 an, deren Mutter 42 mit der Exzenterbüchse 9 verbunden ist. Durch Ansteuern des Motors 15 ändert sich der Abstand zwischen der Mutter 42 und dem Befestigungspunkt des Motors 15 an den Pleuel 12, so dass die Exzenterbüchse 9 schwenkt. Auch hier kann die Stromversorgung des Motors 15 über die Kabelschlaufe erfolgen.

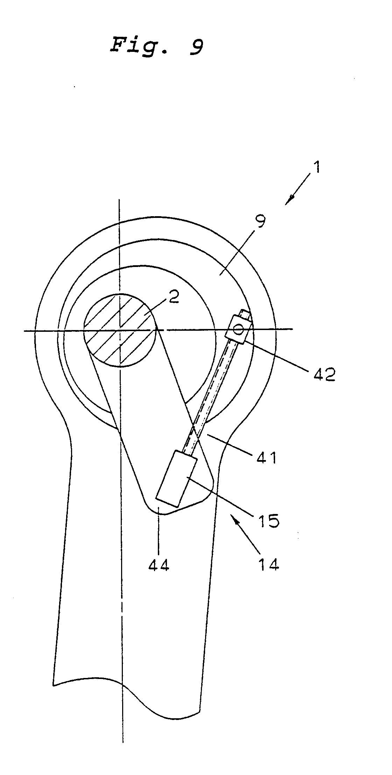

Während sich bei den beiden vorgenannten Ausführungsformen der Servoantrieb 14 einenends jeweils an dem Pleuel abstützt, ist der Servoantrieb 14 bei dem Stößelantrieb 1 nach Figur 9 an der Exzenterwelle 2 gehalten. Diese weist dazu einen nach einer Seite wegstehenden Träger 44 auf, der den Motor 15 des Servoantriebs 14 trägt. Der Motor betätigt die Exzenterbüchse 9 über eine Gewindelspindel 41 und eine Mutter 42 wie bei dem vorstehend beschriebenen Ausführungsbeispiel.

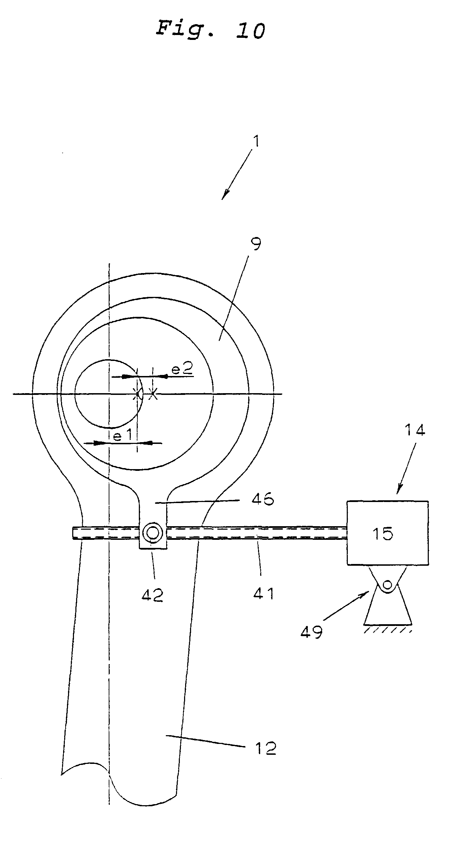

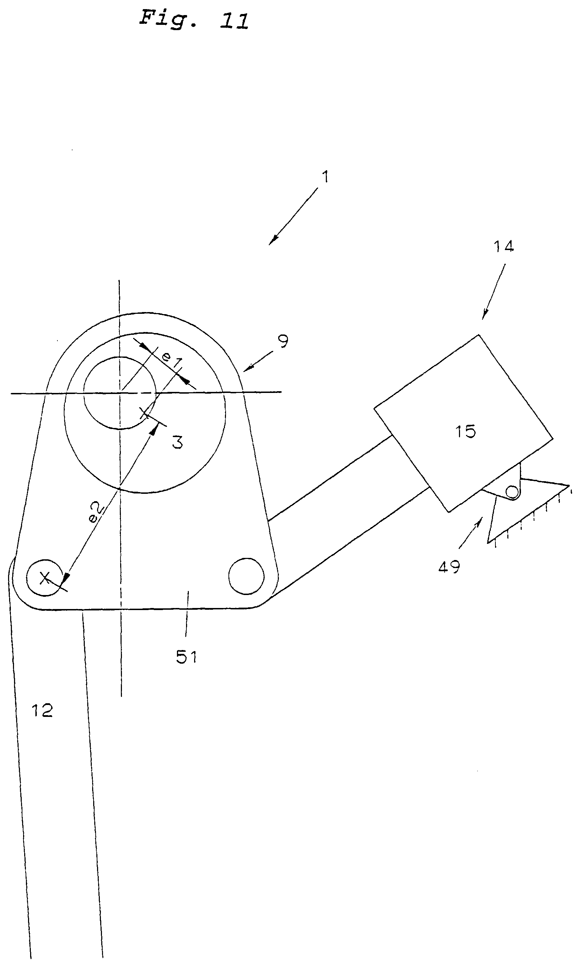

Weitere Ausführungsformen mit gestellfest angeordnetem Servoantrieb 14 sind aus den Figuren 10 und 11 ersichtlich. Bei dem Stößelantrieb 1 nach Figur 10 ist die Exzenterbüchse 9 mit einem Schwenkhebel 46 versehen, der radial von dieser absteht. Der Schwenkhebel 46 ist mit der Mutter 42 des hier als Linearantrieb ausgebildeten Servoantriebs 14 verbunden. Die Mutter 42 sitzt auf der Gewindespindel 41, die von dem Motor 15 angetrieben ist. Dieser ist an einem Kippgelenk 49 schwenbar gelagert. Die Exzentrizität e1 ist bei diesem Stößelantrieb 1 größer als die Exzentrizität e2. Soll die Exzentrizität e2 größer sein als die Exzentrizität e1, kann die Exzentereinrichtung 9 als Schwingpleuel oder Zwischenexzenter 3 und Pleuel 12 angeordneter Hebel 51 ausgebildet sein. Dessen Winkelpostion ist über den Servoantrieb 14 verstellbar, der als bspw. Linearantrieb oder als Schubkurbeltrieb ausgebildet sein kann. Der Motor 15 des Servoantriebs 14 kann durch ein Schwinglager 49 an dem Pressengestell gelagert sein. Auch hier wird die Hauptantriebsleistung von der Hauptwelle 3 her aufgebracht. Dies wird erreicht, indem bei zunehmendem Verhältnis der Exzentrizitäten e2/e1 der Stellhub des Servoantriebs 14 soweit verringert wird, dass die bei den erforderlichen Kräften sich bei einer Umdrehung der Hauptwelle 2 von dem Servoantrieb zu verrichtende Arbeit kleiner ist, als die von dem Hauptantrieb zu verrichtende Arbeit.

Alle vorgestellten Stößelantriebe können durch die Massenausgleichsgewichte 28, 29 weitgehend ausgewuchtet werden. Anstelle der Anbringung der Massenausgleichsgewichte 28, 29 an der Exzenterwelle 2 und der Exzentereinrichtung 9 ist es möglich, zumindest das Massenausgleichsgewicht 29 oder auch beide Massenausgleichsgewichte 28, 29 von einem gesonderten Verstellantrieb angetrieben an der Exzenterwelle 2 zu lagern. In diesen Fall ist es möglich beide Massenausgleichsgewichte 28, 29 zu einem Gewicht zu vereinigen, das durch eine gesonderte Antriebseinrichtung jeweils dem Pleuel 12 diametral gegenüberliegend eingestellt wird. Vorzugsweise ist auch der Radius verstellbar, mit dem das Gewicht gehalten ist.

Ein Stößelantrieb 1 zum Antreiben eines Stößels einer Exzenterpresse ist als Exzenterantrieb ausgebildet, auf dem eine weitere Exzentereinricntung 9 nachgeordnet ist. Der Stößelantrieb 1 weist eine Exzenterwelle 2 mit einem Exzenter 3 auf, auf dem bspw. eine Exzenterbüchse 9 sitzt. Die Exzenterbüchse 9 lagert das Pleuel 12. Die Exzenterbüchse 9 ist von einem Servoantrieb 14 angetrieben, der im Gegensatz zu dem Antrieb der Exzenterwelle 2 mit geringen Trägheitsmomenten belastet ist und gezielt und schnell verzögert und beschleunigt werden kann. Auf diese Weise können von der Sinusschwingung deutlich abweichende Stößelkurven erzeugt werden.

## Patentansprüche

1. Exzenterpresse,
mit einer drehbar gelagerten Exzenterwelle (2), die mit einer Hauptantriebseinrichtung (8) zum gleichmäßig drehenden Antreiben der Exzenterwelle (2) verbunden ist,
mit einem Exzenter (3), der mit der Exzenterwelle (2) mit einer Exzentrizität (e1) exzentrisch verbunden ist, um von dieser auf einer Kreisbahn vorgegebenen Durchmessers geführt zu werden, wenn sie drehend angetrieben ist,
mit einer Exzentereinrichtung (9), die an dem Exzenter (3) gelagert ist,
mit einer Servoantriebseinrichtung (14), die in ständiger Antriebsverbindung mit der Exzentereinrichtung (9) steht, und
mit einem Pleuel (12), das an der Exzentereinrichtung (9) um eine Schwenkachse schwenk- oder drehbar gelagert ist, die eine Exzentrizität (e2) zu dem Exzenter (3) aufweist.

2. Exzenterpresse nach Anspruch 1, dadurch gekennzeichnet, dass die Hauptantriebseinrichtung (8) mit einem Schwungrad (7) verbunden ist.

3. Exzenterpresse nach Anspruch 1, dadurch gekennzeichnet, dass die Exzentereinrichtung (9) eine Exzenterbüchse mit einer Außenfläche ist, die mit der Exzentrizität (e2) zu einer den Exzenter (3) aufnehmenden Bohrung angeordnet ist und an der das Pleuel (12) gelagert ist.

4. Exzenterpresse nach Anspruch 1, dadurch gekennzeichnet, dass die Servoantriebseinrichtung (14) gestellfest gelagert und über ein Getriebemittel (17, 18, 19; 31; 41, 42) mit der Exzentereinrichtung (9) verbunden ist.

5. Exzenterpresse nach Anspruch 4, dadurch gekennzeichnet, dass das Getriebemittel eine Schmidt-Kupplung (19) oder ein Zahnradgetriebe zur winkelgerechten Übertragung der Drehbewegung von einer gestellfesten Drehachse auf die Schwenkachse der Exzentereinrichtung (9) aufweist.

6. Exzenterpresse nach Anspruch 1, dadurch gekennzeichnet, dass das Getriebemittel ein Schwenkantrieb (41, 42) ist, der in jeder Stellung eine Drehung der Exzentereinrichtung (9) sperrt und mittels dessen die Winkelstellung der Exzentereinrichtung (9) festlegbar ist.

7. Exzenterpresse nach Anspruch 6, dadurch gekennzeichnet, dass der Schwenkantrieb einen Linearantrieb (41, 42) aufweist.

8. Exzenterpresse nach Anspruch 1, dadurch gekennzeichnet, dass die Servoantriebseinrichtung (14) von der Exzenterwelle (2) oder von dem Exzenter (3) getragen ist.

9. Exzenterpresse nach Anspruch 1 oder 8, dadurch gekennzeichnet, dass zu der Servoantriebseinrichtung (14) wenigstens ein, vorzugsweise mehrere Servomotoren (15, 15') gehören, die über ein Getriebemittel (17, 18) mit der Exzentereinrichtung (9) verbunden sind.

10. Exzenterpresse nach Anspruch 1, dadurch gekennzeichnet, dass die Servoantriebseinrichtung (14) ein elektrischer Antrieb ist.

11. Exzenterpresse nach Anspruch 1, dadurch gekennzeichnet, dass die Servoantriebseinrichtung (14) ein Hydroantrieb ist.

12. Exzenterpresse nach Anspruch 1, dadurch gekennzeichnet, dass die Servoantriebseinrichtung (14) ein Direktantrieb ist.

13. Exzenterpresse nach Anspruch 1, dadurch gekennzeichnet, dass von der Exzenterwelle (2) ein Gegengewicht (29) zum Massenausgleich angetrieben ist, das der Bewegung der Exzentereinrichtung (9) entsprechend bewegbar ist.

14. Exzenterpresse nach Anspruch 13, dadurch gekennzeicnnet, dass das Gegengewicht (29) mit der Exzentereinrichtung (9) verbunden ist.

15. Exzenterpresse nach Anspruch 1, dadurch gekennzeichnet, dass von der Exzenterwelle (2) ein Gegengewicht (28) zum Massenausgleich des Exzenters (3) und aller mit diesem verbundenen Teile angetieben ist.

16. Exzenterpresse nach Anspruch 1, dadurch gekennzeicnnet, dass die Servoantriebseinrichtung (14) von dem Pleuel (12) getragen ist.

17. Exzenterpresse nach Anspruch 1, dadurch gekennzeichnet, dass wenigstens eine auf die Exzentereinrichtung (9) wirkende Bremseinrichtung vorgesehen ist, mittels derer die Exzentereinrichtung (9) wenigstens für festlegbare Winkelbereiche gestellfest und/oder Exzenderwellenfest und/oder pleuelfest blockierbar ist.

18. Exzenterpresse nach Anspruch 1, dadurch gekennzeichnet, dass der Stößelantrieb (1) ein Massenausgleichsgewicht (30) aufweist, das von der Exzenterwelle (2) über einn Exzenter (3a) und eine zusätzliche Exzentereinrichtung (9a) translatorisch angetrieben ist, wobei die Exzentereinrichtung (9a) mit der Exzentereinrichtung (9) des Stößels in Getriebeverbindung steht.

19. Exzenterpresse nach Anspruch 1, dadurch gekennzeichnet, dass die Servoantriebseinrichtung (14) zur Einstellung des Weg-Zeitverlaufs der Stößelbewegung frei programmierbar ist.
